Europäisches Patentamt

(19) European Patent Office

Office européen des brevets

(11) Numéro de publication : **0 132 169**

**B1**

(12) **FASCICULE DE BREVET EUROPÉEN**

(45) Date de publication du fascicule du brevet :
09.09.87

(51) Int. Cl.⁴ : **B 01 F** 3/10, B 01 F 13/10,
B 29 B 7/74, B 29 B 7/32

(21) Numéro de dépôt : **84401216.1**

(22) Date de dépôt : **14.06.84**

(54) Procédé et dispositif pour la fabrication par coulée d'une couche optiquement homogène transparente à partir d'un mélange de composants.

(30) Priorité : 14.06.83 FR 8309839

(43) Date de publication de la demande :
23.01.85 Bulletin 85/04

(45) Mention de la délivrance du brevet :
09.09.87 Bulletin 87/37

(84) Etats contractants désignés :
BE DE FR GB IT SE

(56) Documents cités :
FR-A- 1 211 689
FR-A- 2 134 377
FR-A- 2 398 606
GB-A- 1 047 731
GB-A- 2 086 249
US-A- 2 556 854
US-A- 4 330 215
KUNSTSTOFFBERATER, vol. 26, juillet/août 1981, page 8, Frankfurt/Main, DE; "Verbessertes Mischergebnis"

(73) Titulaire : SAINT-GOBAIN VITRAGE
Les Miroirs 18, avenue d'Alsace
F-92400 Courbevoie (FR)
BE FR GB IT SE
VEGLA Vereinigte Glaswerke GmbH
Viktoriaallee 3-5
D-5100 Aachen (DE)
DE

(72) Inventeur : Gillner, Manfred
Rollefstrasse 52b
D5100 Aachen (DE)
Inventeur : Friedrich, Hans-Georg
Klosterstrasse 116
D5102 Wuersenien (DE)
Inventeur : Grau, Christian
Lindenweg 17
D5100 Aachen (DE)
Inventeur : Grumbach, Richard
Forster strasse 17
D5100 Aachen (DE)
Inventeur : Scholl, Heinz
Eschenweg 59
D5180 Eschweiler (DE)
Inventeur : Hiemenz, Christian
Mittelstrasse 30
D5120 Herzogenrath (DE)

(74) Mandataire : Muller, René et al
SAINT-GOBAIN RECHERCHE 39, quai Lucien Lefranc
F-93304 Aubervilliers (FR)

Jouve, 18, rue St-Denis, 75001 Paris, France

EP 0 132 169 B1

**Description**

La présente invention concerne un procédé pour la fabrication de couches optiquement homogènes, hautement transparentes à partir d'un mélange de plusieurs composants en particulier à partir d'un mélange de composants pouvant être coulé et réagissant pour donner un polyuréthanne, selon lequel on mélange les composants de réaction, le cas échéant avec addition d'un catalyseur de réaction, et on dépose le mélange sur un substrat de coulée sur lequel la couche effectue sa réaction. L'invention concerne en outre un dispositif pour l'exécution du procédé.

Dans certains cas, des objets en matière plastique doivent respecter des exigences extrêmement élevées en ce qui concerne l'homogénéité de la matière plastique. Il en est ainsi, par exemple, de couches, pellicules ou plaques transparentes qui doivent permettre une vision sans défaut ni distorsion. De telles couches ou pellicules hautement transparentes s'utilisent, par exemple, comme couches de protection contre la fragmentation sur des vitres en verre au silicate ou comme couches améliorant la résistance à l'abrasion sur des substrats en matière plastique. De telles vitres en verre de sécurité ou vitres en matière plastique insensibles à l'abrasion, ainsi que la fabrication de telles couches à partir de polyuréthannes déterminés sont décrites, par exemple, dans les documents DE-OS 20 58 504 et DE-AS 22 28 299 et 26 29 779.

Dans de tels procédés de coulée réactive de plusieurs composants, l'homogénéité et ainsi la qualité optique de la couche de polyuréthanne est essentiellement déterminée par l'opération de mélange qui précède immédiatement la coulée de la couche. Au moment où les composants réactifs entrent en contact les uns avec les autres débute en effet la réaction de polyaddition et étant donné que les fractions du mélange qui réagissent présentent une viscosité différente de celle des constituants de réaction, des stries se forment à l'intérieur de la masse coulée et sont visibles dans la couche au terme de la réaction. Pour cette raison, un mélange aussi homogène que possible des composants de réaction doit être effectué dans le temps le plus court possible lorsqu'on veut obtenir une réaction uniforme dans la masse coulée, c'est-à-dire éviter la formation de stries. Le mélange homogène des composants de réaction est encore rendu difficile dans le cas du polyuréthanne par le fait que les deux composants, à savoir le constituant polyol et le composant isocyanate, présentent des viscosités nettement différentes, la différence se mesurant selon un facteur compris entre 4 et 8 ou davantage.

On connaît d'après le document FR-A-1 211 689 un dispositif mélangeur dans lequel les constituants sont divisés chacun en une pluralité de courants individuels qui sont ensuite entremêlés pour former un mélange qui passe directement dans un mélangeur dynamique.

Il est d'autre part mentionné dans le document GB-A-2 086 249 qu'il appartient à l'état de la technique de combiner un mélangeur statique avec un mélangeur dynamique sans préciser l'ordre de placement de ces mélangeurs l'un par rapport à l'autre, et pour des matériaux pour lesquels la différence de viscosité est considérable.

L'invention a pour but de procurer un procédé pour mélanger deux ou plus de deux composants d'un système à plusieurs composants de réaction réagissant pour donner un polyuréthanne, lequel procédé, en un laps de temps le plus court possible après la combinaison des composants de réaction, assure une homogénéité optimale du mélange satisfaisant aux exigences les plus élevées.

Suivant l'invention, ce but est réalisé par le fait que les composants de réaction sont mélangés, après leur combinaison tout d'abord un mélangeur fonctionnant sur base du principe statique, puis dans un mélangeur dynamique qui suit immédiatement le mélangeur statique.

Le procédé conforme à l'invention donne des pellicules ou couches transparentes exemptes de stries d'une qualité optique optimale. Ce résultat est atteint par une combinaison voulue de deux procédés de mélange connus mis en œuvre dans un ordre déterminé, le résultat de l'opération de mélange pouvant encore être amélioré davantage par certains agencements préférés des dispositifs utilisés.

L'invention est basée sur le fait établi que l'utilisation des procédés de mélange connus n'aboutit pas au résultat souhaité dans le cas des difficultés particulières existantes, mais au contraire que la fabrication de pellicules exemptes de distorsion optique, c'est-à-dire de pellicules sans stries, n'est de cette façon pas possible. Si l'on utilise, par exemple, le procédé de mélange statique dans lequel on emploie les divers mélangeurs connus pour le mélange de liquides dans le domaine d'écoulement laminaire, on observe qu'une distance de mélange relativement longue est nécessaire pour assurer un mélange suffisant des constituants de réaction. Le mélange réactif a cependant besoin d'un temps relativement long pour parcourir cette longue distance de mélange tandis que le processus de polyaddition débute déjà. De plus, dans le cas de longues distances de mélange, les différences des temps de séjour des filets coulés individuels augmentent, de sorte que, vu sur toute la section, des conditions de reaction différentes existent à l'extrémité de la distance de mélange. Lorsque, par contre, pour raccourcir le temps de mélange, on utilise un mélangeur dynamique en lieu et place d'un tube de mélange statique, le résultat n'est pas non plus satisfaisant. Ceci est dû au fait que, aux bas régimes, la qualité du mélange est insuffisante et que, d'autre part, aux hauts régimes, une élévation de température du mélange de réaction se produit par friction, ce qui crée localement des fractions de mélange à degré de polymérisation poussé, ce qui nuit considérablement aux propriétés optiques de la couche coulée. En conséquence, la réaction de polyaddition se déroule dans son ensemble plus rapidement ce qui, à cause de l'augmentation de la viscosité du mélange à couler, peut avoir des conséquences très défavorables pour l'opération de coulée elle-même, car la formation d'une couche coulée uniforme dans l'interstice de coulée est ainsi empêchée. Tous ces inconvénients ne sont évités que par la combinaison caractéristique de la présente invention, à savoir par le fait qu'après la réunion des composants de réaction ceux-ci parcourent d'abord une distance de mélange statique qui est si courte que seul un bon prémélange est réalisé en un temps court et que le mélange de réaction prémélangé de manière statique sans élévation de température est amené immédiatement ensuite à un dispositif mélangeur dynamique dans lequel le mélange est amené au degré d'homogénéisation requis.

En règle générale, un catalyseur et le cas échéant d'autres additifs sont ajoutés au mélange de réaction, comme par exemple un stabilisant, pour augmenter la résistance aux rayons ultraviolets. Dans une autre réalisation avantageuse de l'invention, ces additifs sont répartis uniformément dans un des composants de réaction avant que les composants de réaction soient réunis. Il s'est avéré que l'on peut ainsi éviter de la manière la plus sûre des défauts d'homogénéité éventuels qui sont à attribuer à l'apport de ces additifs.

Un dispositif convenant pour la mise en œuvre du procédé conforme à l'invention comporte d'une manière particulièrement avantageuse un mélangeur dynamique dans lequel l'arbre de mélange est couplé à l'appareil d'entraînement par l'intermédiaire d'un accouplement à aimants permanents, le mélange de réaction s'écoulant entre la paroi de l'enveloppe du mélangeur et l'anneau de couplage magnétique relié à l'arbre de mélange, de sorte que l'anneau de couplage magnétique intérieur est entraîné par un anneau de couplage magnétique entraîné disposé à l'extérieur de l'enveloppe du mélangeur. Un mélangeur dynamique de cette construction a l'avantage que le mélange de réaction est entraîné de manière linéaire à travers le mélangeur, de sorte qu'un flux de liquide essentiellement linéaire s'établit car le mélangeur est dépourvu de zones dites mortes dans lesquelles des fractions du mélange de réaction peuvent séjourner plus longtemps que d'autres. De plus, la pression du mélange de réaction traversant ce mélangeur peut être fortement accrue sans que des difficultés d'étanchéité surgissent. La pression plus élevée permet d'obtenir des vitesses d'écoulement accrues, de sorte que le temps de séjour du mélange de réaction de matière plastique dans le mélangeur est raccourci, ce qui permet d'éviter le risque d'un durcissement précoce ou d'une polymrérisation trop forte du mélange de réaction, influençant la fluidité et l'homogénéité du mélange de réaction de matière plastique. Le mélange de réaction qui quitte le mélangeur est d'une composition complètement homogène et est ainsi entièrement exempt de stries.

Le procédé de mélange conforme à l'invention et le dispositif décrit plus loin en détail conviennent non seulement pour mélanger des résines de réaction, mais aussi bien entendu pour mélanger et homogénéiser d'autres systèmes, par exemple de solvants et d'adhésifs, lorsque le mélange doit respecter des exigences particulièrement élevées du point de vue de son homogénéité. Il en va toujours ainsi lorsque ces films ou pellicules doivent être exempts de stries pour garantir une vision sans distorsion.

D'autres agencements et développements font l'objet des revendications 2 à 9.

Une forme préférée d'exécution de l'invention est illustrée dans les dessins annexés et sera décrite ci-après dans le détail. Aux dessins annexés :

la figure 1 est une vue schématique du déroulement du procédé conforme à l'invention ;

la figure 2 est une vue en coupe d'un tube mélangeur statique ;

la figure 3 est une vue en coupe longitudinale d'un mélangeur dynamique ;

la figure 4 illustre un détail IV de la figure 3, à plus grande échelle ;

la figure 5 est une vue en coupe fragmentaire du mélangeur dynamique suivant la ligne V-V de la Fig. 3 ;

la figure 6 illustre le détail VI de la Fig. 5, à plus grande échelle, et

la figure 7 est une vue en coupe de la chambre de mélange du mélangeur dynamique suivant la ligne VII-VII de la Fig. 3.

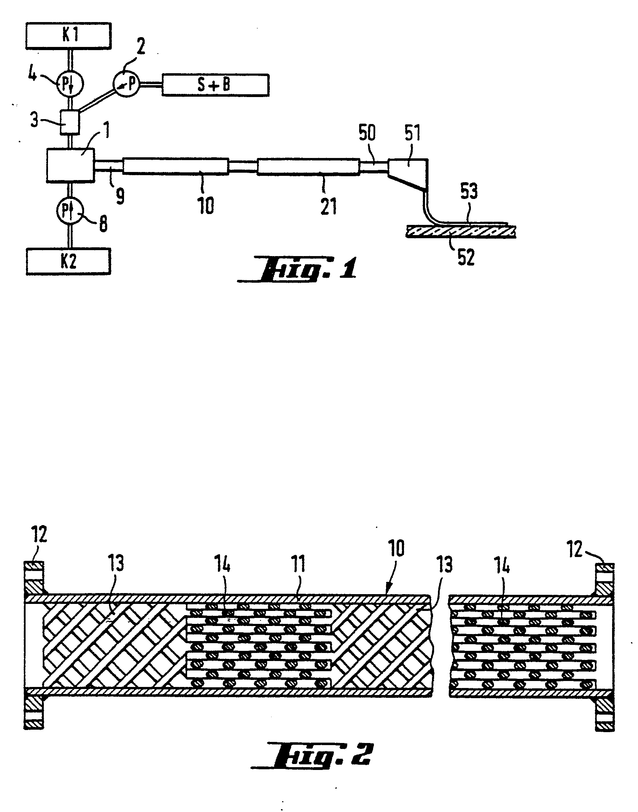

Le déroulement du procédé est illustré schématiquement sur la Fig. 1. Pour fabriquer la résine de polyuréthanne pouvant être coulée, on utilise à titre de composant K 1, un polyéther obtenu par condensation d'oxyde de propylène avec un triol et ayant un poids moléculaire d'environ 450 et une teneur en radicaux OH libres de 10,5 à 12 % et en tant que composant K 2, un biuret de 1,6-hexaméthylènediisocyanate présentant une teneur en radicaux NCO libres de 21 à 22 %. Le composant K 1 a une viscosité à la température ambiante de 300 à 800 cP et le composant K 2 également à la température ambiante, une viscosité de 2 000 à 14 000 cP. Pour produire le mélange pouvant être coulé, on ajoute en outre, à titre de stabilisant aux rayons ultraviolets, du 2,6-di-t-butyl-p-crésol en une quantité de 2,3 %, sur base de la quantité du composant K 1 et à titre d'accélérateur, du dilaurate de dibutylétain en une quantité de 0,05 %, sur base de la quantité du composant K 1. Les composants K 1 et K 2 sont mélangés l'un à l'autre selon un rapport pondéral d'environ 1 : 1.

Avant de combiner les composants K 1 et K 2 dans la chambre de mélange 1, on prépare tout d'abord un mélange des additifs, c'est-à-dire du stabilisant S et du catalyseur B, dans le rapport indiqué, et on introduit ce mélange dans l'appareil de mélange 3 au moyen de la pompe doseuse 2 représentée schématiquement. Le composant K 1 est aussi introduit dans cet appareil de mélange 3 au moyen de la pompe doseuse 4, les pompes doseuses 2 et 4 étant agencées de telle sorte que le rapport quantitatif souhaité au mélange de stabilisant et du catalyseur d'une part, et du composant K 1, d'autre part, soit maintenu avec précision. L'appareil de mélange 3 comme tel peut en principe être de n'importe quelle structure et ne constitue pas un élément critique du procédé. Des mélangeurs statiques du type du mélangeur statique 10, décrit en détail plus loin, qui suit la chambre de mélange 1 se sont avérés convenables pour l'appareil de mélange 3. Le composant K 1 mélangé au stabilisant et au catalyseur s'écoule dans la chambre de mélange 1 à partir de l'appareil de mélange 3.

Le composant K 2 est aussi introduit dans la chambre de mélange 1, et ce également à l'aide d'une pompe doseuse 8 dans le rapport quantitatif souhaité.

La chambre de mélange 1 a simplement pour fonction de combiner les composants de réaction. Dans les conduites d'amenée des deux composants sont prévues des valves de retenue (non représentées) qui empêchent que le sens de l'écoulement change en cas d'inversion de pression. A la tubulure de sortie est raccordé le tuyau 9 qui introduit les composants de réaction combinés dans le mélangeur statique 10.

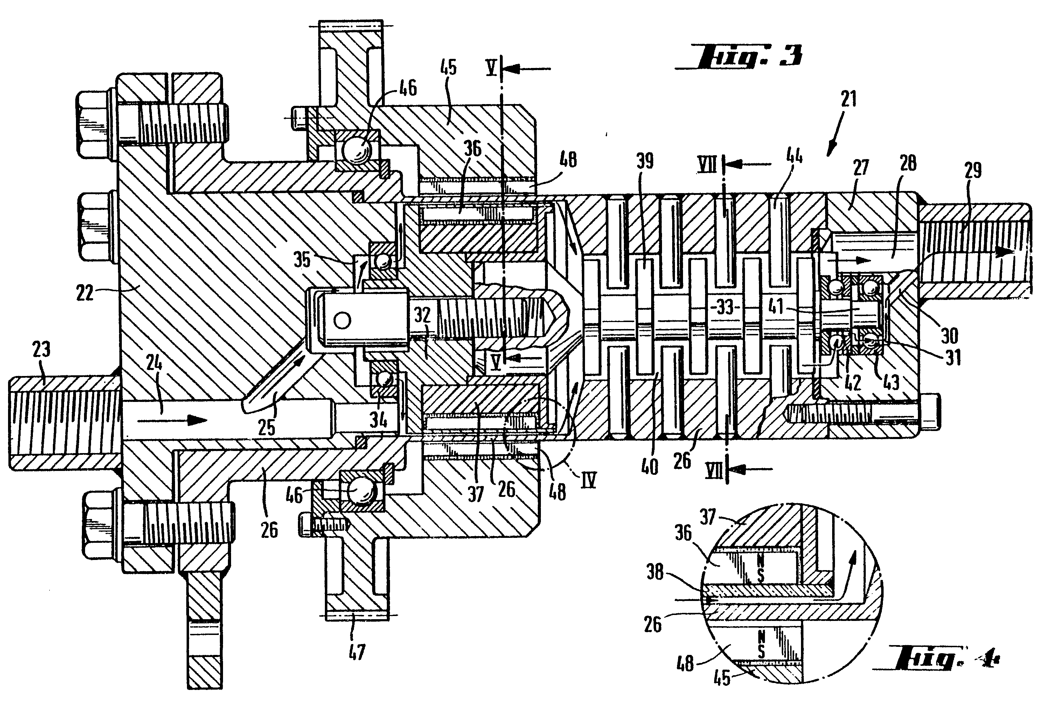

Le mélangeur statique 10, qui est représenté en coupe longitudinale sur la Fig. 2, est formé d'un tube 11 pourvu de brides 12 et d'une longueur de 360 mm, dans lequel sont installés des éléments mélangeurs 13, 14. Les éléments mélangeurs 13, 14 d'une longueur de 24 mm et d'un diamètre de 12 mm correspondant au diamètre intérieur du tube 11, sont formés de lattes assemblées et disposées en substance transversalement à la direction d'écoulement, tout en étant décalées chaque fois de 90° l'une de l'autre. Quinze éléments mélangeurs 13 et 14 de ce type sont disposés au total dans le tube 11 en alternance. Les lattes des éléments mélangeurs disposées en travers de la direction d'écoulement coupent continuellement les composants à mélanger en couches et les étalent sur toute la section du tube.

A cet effet, le mélangeur statique SULZER, type SMX de la Société Gebrüder Sulzer AG, Suisse, et le mélangeur N-FORM de la Société Bran & Lübbe de Hambourg se sont avérés particulièrement convenables.

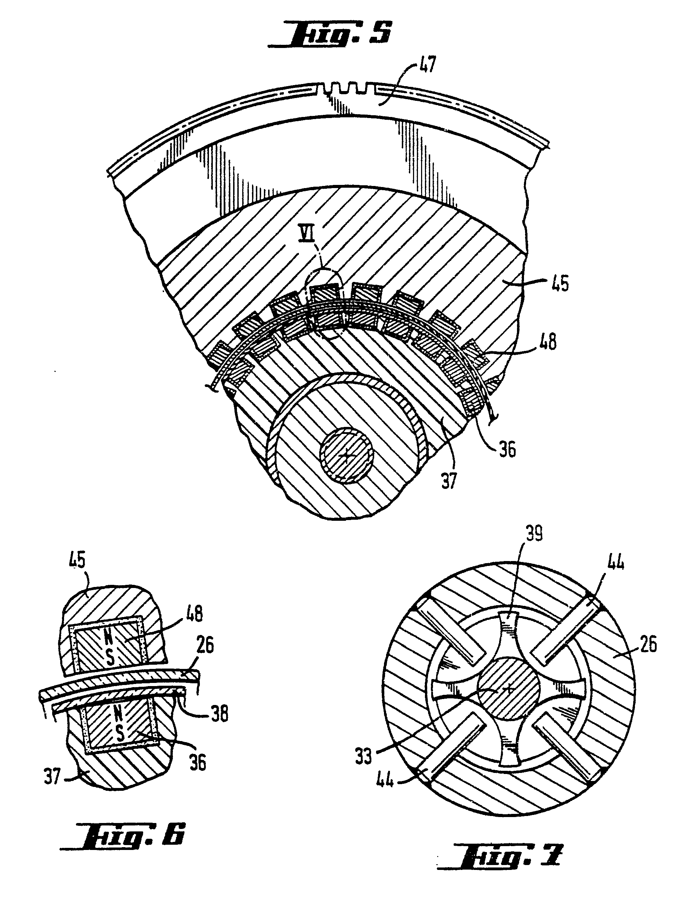

Immédiatement après son passage dans le mélangeur statique 10, le mélange de réaction est introduit dans le mélangeur dynamique 21, qui est représenté en détail dans les Fig. 3 à 7. La figure 3 montre le mélangeur 21 avec la douille de retenue 22 immobile et la tubulure d'admission 23 par laquelle le mélange de réaction fluide pénètre. La douille de retenue 22 est pourvue d'une forure de traversée 24 qui est raccordée à la tubulure d'admission 23. Une forure 25 se branche sur la forure de traversée 24 et débouche dans un évidement 35 centré dans la douille de retenue 22. Une partie du mélange de réaction s'écoule immédiatement par la forure 25 à travers le roulement à billes 34 portant l'arbre 33 et assure ainsi un rinçage continu du palier, ce qui évite des zones mortes d'écoulement dans la région du palier. L'enveloppe 26 du mélangeur peut être fixée rigidement à la douille de retenue 26, par exemple par une liaison vissée. L'enveloppe 26 est fermée de manière détachable au moyen d'un couvercle 27. Le couvercle 27 est pourvu d'une forure 28 s'étendant dans le sens axial et d'une tubulure de sortie 29 pour la sortie du mélange de réaction de matière synthétique fluide. Une forure 30 présentant une inclinaison se branche sur la forure 28 et mène à l'évidement 31 central dans lequel tourillonne l'arbre 33. Dans l'enveloppe 26 est disposé un anneau de couplage intérieur 32, qui est relié rigidement à l'arbre 33. L'anneau de couplage 32 est monté à rotation sur un roulement à billes 34 dans l'évidement 35 de la douille de retenue 22. Des aimants permanents 36 sont disposés sur toute la périphérie de l'anneau de couplage intérieur et sont emboîtés dans des creux d'une gaine annulaire 37 pouvant être insérée axialement. Les aimants permanents 36 sont, par exemple, recouverts vers l'extérieur (voir Fig. 4) par un cylindre creux 38 à paroi mince qui est, par exemple, constitué d'une matière synthétique chimiquement résistante.

Des éléments mélangeurs 39, en particulier des croix mélangeuses, sont disposés sur l'arbre de mélange 33 dans la chambre de mélange 40 à une certaine distance l'un de l'autre. L'arbre 33 s'étend sur l'ensemble de la chambre de mélange 40. L'arbre 33 se termine dans le tourillon 41 qui est monté à rotation dans le couvercle 27 dans les paliers 42, 43. Le mélange de réaction quittant la chambre de mélange s'écoule, pour partie, par les paliers 42 et 43, par l'intermédiaire de la forure 30, dans la tubulure de sortie 29.

Dans la région de la chambre de mélange 40, entre les croix tournantes 39 de l'arbre 33, des tiges de mélange 44, dont les extrémités pénètrent dans la chambre de mélange 40, sont insérées dans la paroi de l'enveloppe 26. De préférence, deux à quatre tiges de mélange sont disposées réparties sur la périphérie de l'enveloppe 26 (Fig. 7).

A l'extérieur de l'enveloppe 26, à la hauteur de l'anneau 32, un anneau de couplage 45 est monté tournant sur l'enveloppe. L'anneau de couplage 45 est de préférence monté sur l'enveloppe 26 par l'intermédiaire d'un palier 46. L'anneau de couplage 45 est relié par l'intermédiaire d'un pignon 47 à un moteur, non représenté, qui entraîne l'anneau de couplage 45. Dans la surface annulaire de l'anneau de couplage qui est orientée vers l'enveloppe 26 et qui est disposée au-dessus de l'anneau 32, des aimants permanents 48 sont emboîtés tout le long de la périphérie dans des creux, de nombreux aimants permanents étant disposés parallèlement côte à côte. Les aimants permanents dans l'anneau de couplage extérieur 45 et dans la gaine annulaire 37 sont disposés de telle manière qu'ils sont toujours orientés l'un vers l'autre par des pôles opposés. Lorsque les aimants permanents disposés dans l'anneau de couplage 45 sont orientés avec le pôle sud vers l'intérieur, les aimants permanents disposés dans la gaine annulaire 37 sont orientés avec le pôle nord vers l'extérieur (voir Fig. 6).

Le mélange de réaction de matière synthétique fluide parvient, par l'intermédiaire de la tubulure d'admission 23, de la forure 24 dans la douille de retenue 22 et de l'espace intermédiaire annulaire présent entre l'anneau de couplage intérieur 32 et la paroi d'enveloppe 26, dans la chambre de mélange 40 qui est disposée en aval de l'accouplement à aimants permanents. Une partie du mélange de réaction s'écoule par la forure 25 immédiatement à travers le roulement à billes 34. Le mélange de réaction subit, dans la chambre de mélange 40, un traitement dynamique et est mélangé de manière intensive sans que des zones mortes puissent se former dans la région de couplage à proximité des paliers ou dans la chambre de mélange. Le mélange de réaction quitte la chambre de mélange 40 pour partie par l'intermédiaire des paliers 42 et 33 et pour partie par l'intermédiaire de la forure 28 par la tubulure de sortie 29. Le sens d'écoulement du mélange de réaction est indiqué par des flèches. Le sens d'écoulement et le rapport d'écoulement dans l'accouplement à aimants permanents sont en particulier représentés à la Fig. 4.

La figure 3 montre clairement que le mélangeur représenté ne comporte pas de joints d'étanchéité glissants qui s'échauffent pendant le fonctionnement et provoquent ainsi une polymérisation trop rapide à cet endroit. Le mélange de réaction de matière synthétique fluide s'écoule de manière quasi linéaire à travers le mélangeur sans traverser des zones mortes, ce qui est d'une importance particulière pour la production d'un mélange de réaction mélangé de manière absolument homogène.

Le mélange de réaction sortant par la tubulure de sortie 29 présente maintenant une homogénéité optimale. Il est admis par la conduite 50 au dispositif de coulée 51. Dans le cas de ce dispositif de coulée 51, il peut s'agir d'un dispositif appelé tête de coulée à racle tel que celui représenté, par exemple, dans le document DE-PS 26 14 596. Au cas où il est prévu de produire des feuilles à partir du mélange de réaction, on utilise avantageusement, comme substrat de coulée 52, des plaques de verre. On applique sur ce substrat de coulée 52, le mélange de réaction en une couche d'une épaisseur uniforme. Après polymérisation de la couche 53 avec chauffage correspondant, on arrache la feuille de polyuréthanne finie du substrat de coulée 52.

## Revendications

1. Procédé pour la fabrication d'une couche homogène et hautement transparente à partir d'un mélange pouvant être coulé de plusieurs composants de réaction réagissant pour donner un polyuréthanne, selon lequel on mélange les composants de réaction, le cas échéant avec addition d'un catalyseur de réaction, et on dépose le mélange sur un substrat de coulée pour former une couche qui réagit, caractérisé en ce que les composants de réaction sont réunis dans une chambre de mélange, puis introduits dans un mélangeur statique, puis dans un mélangeur dynamique qui suit immédiatement le mélangeur statique.

2. Procédé suivant la revendication 1, caractérisé en ce que le catalyseur de polymérisation et, le cas échéant, d'autres additifs tels qu'un stabilisant, sont répartis uniformément dans un des composants de réaction avant la combinaison des composants de réaction.

3. Dispositif pour la mise en œuvre du procédé suivant la revendication 1 ou 2, caractérisé par une chambre de mélange (1) pourvue de deux tubulures de raccordement pour l'admission dosée des composants de réaction et d'une tubulure de raccordement pour le raccordement au mélangeur statique, un mélangeur statique (10) faisant suite à la chambre de mélange (1) et un dispositif de mélange dynamique (21) disposé en aval du mélangeur statique (10).

4. Dispositif suivant la revendication 3, caractérisé en ce que les éléments mélangeurs (13, 14) dans le mélangeur statique (10) sont constitués d'un cadre fait de lattes entrelacées qui se croisent, plusieurs éléments mélangeurs de ce type étant disposés les uns derrière les autres dans le tube (11) du mélangeur (10) en étant chaque fois décalés de 90°.

5. Dispositif suivant les revendications 3 et 4, caractérisé en ce que le mélangeur dynamique (21) est constitué d'une enveloppe (26) comportent un arbre de mélange (33) entraîné, l'arbre de mélange (33) étant pourvu d'éléments mélangeurs (39) qui coopèrent avec les éléments mélangeurs (44) disposés dans l'enveloppe (26).

6. Dispositif suivant la revendication 5, caractérisé en ce que l'arbre de mélange (33) est couplé à l'appareil d'entraînement par l'intermédiaire d'un accouplement à aimants permanents, le mélange de réaction fluide s'écoulant entre la paroi de l'enveloppe (26) du mélangeur et l'anneau de couplage intérieur relié à l'arbre de mélange (33), l'anneau de couplage intérieur (36, 37, 38) étant entraîné par un anneau de couplage magnétique entraîné disposé à l'extérieur de l'enveloppe du mélangeur.

7. Dispositif suivant la revendication 6, caractérisé en ce que les surfaces des anneaux de couplage qui sont orientées l'une vers l'autre sont garnies d'aimants permanents (36, 48) répartis uniformément sur la périphérie.

8. Dispositif suivant la revendication 7, caractérisé en ce que les aimants permanents (36, 48) sont chaque fois emboîtés dans des creux des anneaux de couplage et les aimants permanents (36) de l'anneau de couplage intérieur sont recouverts de manière étanche aux liquides.

9. Dispositif suivant les revendications 5 à 8, caractérisé en ce que les évidements (35, 31) portant les paliers (34, 42, 43) pour l'arbre de mélange (33) sont raccordés par des forures (25, 30) au courant de mélange de réaction, les paliers (34, 42, 43) étant ainsi immédiatement traversés par le courant de matière.

**Claims**

1. A method of making a homogeneous layer of high transparency from a castable mixture of a plurality of reaction components which react to produce a polyurethane, in which the reaction components are mixed with addition of a reaction catalyst if required, and the mixture is deposited on a casting substrate to form a layer which reacts, characterised in that the reaction components are put together in a mixing chamber, then introduced into a static mixer, and then into a dynamic mixer which immediately follows the static mixer.

2. A method according to claim 1, characterised in that the polymerisation catalyst and, if required, other additives such as a stabiliser are distributed uniformly in one of the reaction components before combination of the reaction components.

3. Apparatus for carrying out a method according to claim 1 or 2, characterised by a mixing chamber (1) provided with two connecting ducts for metered admission of the reaction components and a connecting duct for connection to a static mixer, a static mixer (10) following the mixing chamber (1) and a dynamic mixing device (21) arranged downstream of the static mixer (10).

4. Apparatus according to claim 3, characterised in that the mixer elements (13, 14) in the static mixer (10) comprise a framework of interwoven criss-cross laths, a plurality of mixer elements of this type being arranged one behind another in the tube (11) of the mixer (10), each being shifted from the next by 90°.

5. Apparatus according to claim 3 or 4, characterised in that the dynamic mixer (21) comprises an envelope (26) comprising a driven mixing shaft (33), the mixing shaft (33) being provided with mixer elements (39) which cooperate with mixer elements (44) arranged inside the envelope (26).

6. Apparatus according to claim 5, characterised in that the mixing shaft (33) is coupled to the driving means by a permanent magnet coupling, the fluid reaction mixture flowing between the wall of the envelope (26) of the mixer and an interior coupling ring connected to the mixing shaft (33), the interior coupling ring (36, 37, 38) being driven by a driven magnetic coupling ring arranged outside the mixer envelope.

7. Apparatus according to claim 6, characterised in that the surfaces of the coupling rings oriented towards each other are provided with permanent magnets (36, 48) distributed uniformly around the periphery.

8. Apparatus according to claim 7, characterised in that the permanent magnets (36, 48) are all enclosed in cavities in the coupling rings and the permanent magnets (36) of the interior coupling ring are covered in a liquid-tight manner.

9. Apparatus according to any one of claim 5 to 8, characterised in that openings (35, 51) carrying bearings (34, 42, 43) for the mixing shaft (33) are connected by bores (25, 30) to the stream of reaction mixture, the bearings (34, 42, 43) thus being immediately traversed by the flow of material.

**Patentansprüche**

1. Verfahren zum Herstellen einer homogenen, hochtransparenten Schicht aus einer gießfähigen aus mehreren Komponenten bestehenden und ein Polyurethan bildenden Reaktionsmischung, bei dem die Reaktions-Komponenten gegebenenfalls unter Zusatz eines Reaktionskatalysators gemischt und die Mischung zur Bildung einer ausreagierenden Schicht auf eine Gießunterlage aufgetragen wird, dadurch gekennzeichnet, daß die Reaktions-Komponenten in einer Mischkammer zusammengeführt, anschließend in einen statischen Mischer und darauf in einen dem statischen Mischer unmittelbar nachgeschalteten dynamischen Mischer eingeleitet werden.

2. Verfahren nach Anspruch 1, dadurch gekennzeichnet, daß der Polymerisationskatalysator und gegebenenfalls andere Zusätze wie ein Stabilisator, in einer der Reaktionskomponenten vor dem Vermischen der Reaktionskomponenten gleichmäßig verteilt werden.

3. Vorrichtung zur Durchführung des Verfahrens nach Anspruch 1 oder 2, gekennzeichnet durch eine Mischkammer (1) mit zwei Zuleitungen für die dosierte Zuführung der Reaktionskomponenten und einer Verbindungsleitung für die Verbindung mit einem statischen Mischer, einen sich an die Mischkammer (1) anschließenden statischen Mischer (10) und einen dem statischen Mischer (10) nachgeschalteten dynamischen Mischer (21).

4. Vorrichtung nach Anspruch 3, dadurch gekennzeichnet, daß die Mischerelemente (13, 14) in dem statischen Mischer (10) aus einem Gerüst aus ineinandergreifenden, sich kreuzenden Stegen bestehen, und daß mehrere solcher Mischerelemente jeweils um 90 Grad versetzt hintereinander in dem Rohr (11) des Mischers (10) angeordnet sind.

5. Vorrichtung nach Anspruch 3 und 4, dadurch gekennzeichnet, daß der dynamische Mischer (21) aus einem Gehäuse (26) mit einer angetriebenen Mischwelle (33) besteht, wobei die Mischwelle (33) mit Mischelementen (39) versehen ist, die mit in dem Gehäuse (26) angeordneten Mischelementen (44) zusammenwirken.

6. Vorrichtung nach Anspruch 5, dadurch gekennzeichnet, daß die Mischwelle (33) mit dem Antriebsaggregat über eine Permanentmagnetkupplung gekoppelt ist, wobei das flüssige Reaktionsgemisch zwischen der Wand des Mischergehäuses (26) und dem inneren, mit der Mischwelle (33) verbundenen Kupplungsring hindurchströmt, wobei der innere Kupplungsring (36, 37, 38) durch einen außerhalb des Mischergehäuses angeordneten angetriebenen Magnetkupplungsring mitgenommen wird.

7. Vorrichtung nach Anspruch 6, dadurch gekennzeichnet, daß die einander zugewandten Flächen der Kupplungsringe mit am Umfang gleichmäßig verteilt angeordneten Permanentmagneten (36, 48) besetzt sind.

8. Vorrichtung nach Anspruch 7, dadurch gekennzeichnet, daß die Permanentmagnete (36, 48) jeweils in Vertiefungen der Kupplungsringe eingelassen sind, und daß die Permanentmagnete (36) des inneren Kupplungsringes flüssigkeitsdicht abgedeckt sind.

9. Vorrichtung nach Anspruch 5 bis 8, dadurch gekennzeichnet, daß die Lager (34, 42, 43) für die Mischwelle (33) tragenden Ausnehmungen (35, 31) über Bohrungen (25, 30) an den Materialstrom des Reaktionsgemisches angeschlossen, und so die Lager (34, 42, 43) unmittelbar von dem Materialstrom durchspült sind.

K1

4 3 2 1 9 10 21 50 51 53 52

S + B

8

K2

**Fig. 1**

12 13 14 11 10 13 14 12

**Fig. 2**

Fig. 3

Fig. 4

0 132 169

**Fig. 5**

**Fig. 6**

**Fig. 7**